# EUROPEAN PATENT APPLICATION

(11) **EP 4 729 208 A1**
(43) Date of publication of application: **22.04.2026**
(21) Application number: 25207067.7
(22) Date of filing: 07.10.2025
(51) Int. Cl.: B22F 10/25, B22F 12/37, B22F 12/90, B23K 26/08, B23K 26/342, B33Y 10/00, B33Y 30/00, B33Y 50/02

(54) **ADDITIVE PROCESSING DEVICE, ADDITIVE PROCESSING METHOD, AND ADDITIVE PROCESSING PROGRAM**

(30) Priority: 09.10.2024 JP 2024177282
(71) Applicant: DMG Mori Co., Ltd., Nara-shi, Nara 630-8122 (JP)
(72) Inventor: MISAWA, Hayato, Nara City, Nara, 6308122 (JP)
(74) Representative: Isarpatent

(57) **Abstract**

Provided is a technology for addressing thermal expansion in a way that is different from conventional methods during additive manufacturing on a workpiece.

An additive manufacturing apparatus includes a laser head configured to perform additive manufacturing on a workpiece, a first support unit configured to support one side of the workpiece in a direction along a predetermined axis and rotatably support the workpiece with respect to the predetermined axis, a second support unit configured to support the other side of the workpiece in the direction along the predetermined axis and rotatably support the workpiece with respect to the predetermined axis, a drive unit configured to move the second support unit along the direction along the predetermined axis, a first detection unit configured to detect a physical quantity correlated with torque applied to the drive unit, and a control unit. The control unit executes a process of controlling the drive unit during at least one of additive manufacturing on the workpiece and cooling of the workpiece such that the physical quantity detected by the first detection unit approaches a predetermined target value.

## Description

### TECHNICAL FIELD

The present disclosure relates to an additive manufacturing apparatus, an additive manufacturing method, and an additive manufacturing program.

### BACKGROUND ART

JP 2023-125537A (Patent Document 1) discloses a processing machine that is capable of maintaining a high degree of accuracy of processing workpieces during additive manufacturing on the workpieces using a directed energy deposition method. The processing machine includes an additive manufacturing head that supplies a powder material to a workpiece and irradiates the work piece with a laser beam, and a first holding unit and a second holding unit for rotatably holding the workpiece. The first holding unit and the second holding unit are arranged opposite each other in the direction of the rotation axis of the workpiece and are configured to hold the workpiece from both sides.

When the workpiece is irradiated with a laser beam, the workpiece thermally expands (refer to paragraph [0005]). Therefore, the processing machine moves the first and second holding units relatively away from each other at the time of additive manufacturing on the workpiece. This suppresses distortion of the surface of the workpiece between the first and second holding units, and improves the accuracy of additive manufacturing on the workpiece.

### Citation list

Patent document 1: JP 2023-125537A

### SUMMARY OF THE INVENTION

The processing machine disclosed in Patent Document 1 detects the temperature of a workpiece during additive manufacturing on the workpiece and calculates the amount of thermal expansion of the workpiece based on the temperature. The processing machine then moves the first and second holding units away from each other by a distance corresponding to the calculated amount of thermal expansion. This configuration can suppress distortion of the workpiece surface caused by thermal expansion during additive fabrication. However, if the shape of the workpiece is not a simple cylindrical shape or a similar shape, but rather is a complex shape, it may take a long time to calculate the amount of thermal expansion of the workpiece.

In view of the above, there is a need for a technology for addressing thermal expansion in a way that is different from conventional methods during additive manufacturing on a workpiece.

### [Means for solving the problem]

In an example of the present disclosure, there is provided an additive manufacturing apparatus for performing additive manufacturing on a workpiece. The additive manufacturing apparatus includes: a laser head configured to perform additive manufacturing on the workpiece by supplying a powder material to the workpiece and irradiating the workpiece with a laser beam; a first support unit configured to support one side of the workpiece in a direction along a predetermined axis and rotatably support the workpiece with respect to the predetermined axis; a second support unit configured to support another side of the workpiece in the direction along the predetermined axis and rotatably support the workpiece with respect to the predetermined axis; a drive unit configured to move the second support unit along the direction along the predetermined axis; a first detection unit configured to detect a physical quantity correlated with torque applied to the drive unit; and a control unit configured to control the additive manufacturing apparatus. The control unit executes a process of controlling the drive unit during at least one of additive manufacturing on the workpiece and cooling of the workpiece such that the physical quantity detected by the first detection unit approaches a predetermined target value.

In an example of the present disclosure, the additive manufacturing apparatus further includes a second detection unit configured to detect a position of the second support unit in the direction along the predetermined axis. The control unit further executes: a process of monitoring whether the position falls within a predetermined range while executing the process of controlling the drive unit; and a process of implementing a predetermined abnormality handling process if the position is outside the predetermined range.

In an example of the present disclosure, the abnormality handling process includes switching from the process of controlling the drive unit such that the physical quantity approaches the predetermined target value to a process of controlling the drive unit such that the position detected by the second detection unit approaches a target position.

In an example of the present disclosure, the abnormality handling process includes a process of outputting a warning indicating that the position is outside the preset range.

In an example of the present disclosure, the first support unit is a first workpiece spindle having a chuck mechanism for gripping the one side of the workpiece. The second support unit is a second workpiece spindle having a chuck mechanism for gripping the other side of the workpiece.

In an example of the present disclosure, the first support unit is a workpiece spindle having a chuck mechanism for gripping the one side of the workpiece. The second support unit is a tailstock having a tailstock mechanism for supporting the other side of the workpiece.

In another example of the present disclosure, there is provided an additive manufacturing apparatus that performs additive manufacturing on a workpiece. The additive manufacturing apparatus includes: a laser head configured to perform additive manufacturing on the workpiece by supplying a powder material to the workpiece and irradiating the workpiece with a laser beam; a first support unit configured to support one side of the workpiece in a direction along a predetermined axis and rotatably support the workpiece with respect to the predetermined axis; a second support unit configured to support the other side of the workpiece in the direction along the predetermined axis and rotatably support the workpiece with respect to the predetermined axis; a drive unit configured to move the second support unit along the direction along the predetermined axis; and a control unit configured to control the additive manufacturing apparatus. The control unit executes a process for disabling control of the drive unit during at least one of additive manufacturing on the workpiece and cooling of the workpiece.

In another example of the present disclosure, there is provided an additive manufacturing method in which an additive manufacturing apparatus performs additive manufacturing on a workpiece. The additive manufacturing apparatus includes: a laser head configured to perform additive manufacturing on the workpiece by supplying a powder material to the workpiece and irradiating the workpiece with a laser beam; a first support unit configured to support one side of the workpiece in a direction along a predetermined axis and rotatably support the workpiece with respect to the predetermined axis; a second support unit configured to support the other side of the workpiece in the direction along the predetermined axis and rotatably support the workpiece with respect to the predetermined axis; a drive unit configured to move the second support unit along the direction along the predetermined axis; and a first detection unit configured to detect a physical quantity correlated with torque applied to the drive unit. The additive manufacturing method includes a step of controlling the drive unit during at least one of additive manufacturing on the workpiece and cooling of the workpiece such that the physical quantity detected by the first detection unit approaches a predetermined target value.

In another example of the present disclosure, there is provided an additive manufacturing program for causing an additive manufacturing apparatus to perform additive manufacturing on a workpiece. The additive manufacturing apparatus includes: a laser head configured to perform additive manufacturing on the workpiece by supplying a powder material to the workpiece and irradiating the workpiece with a laser beam; a first support unit configured to support one side of the workpiece in a direction along a predetermined axis and rotatably support the workpiece with respect to the predetermined axis; a second support unit configured to support the other side of the workpiece in the direction along the predetermined axis and rotatably support the workpiece with respect to the predetermined axis; a drive unit configured to move the second support unit along the direction along the predetermined axis; and a first detection unit configured to detect a physical quantity correlated with torque applied to the drive unit. The additive manufacturing program causes the additive manufacturing apparatus to execute a process of controlling the drive unit during at least one of additive manufacturing on the workpiece and cooling of the workpiece such that the physical quantity detected by the first detection unit approaches a predetermined target value.

These and other objects, features, aspects, and advantages of the present invention will become apparent from the following detailed description of the invention, taken in conjunction with the accompanying drawings.

### BRIEF DESCRIPTION OF THE DRAWINGS

FIG. 1 is a diagram showing an example of the appearance of an additive manufacturing apparatus.
FIG. 2 is a diagram showing an example of an apparatus configuration of the additive manufacturing apparatus.
FIG. 3 is a cross-sectional view of a laser head during additive manufacturing.
FIG. 4 is a diagram schematically showing a control mode for a second workpiece spindle during additive manufacturing.
FIG. 5 is a diagram schematically showing a control mode for the second workpiece spindle after completion of additive manufacturing.
FIG. 6 is a diagram schematically showing a position monitoring function for the second workpiece spindle.
FIG. 7 is a diagram showing an example of a warning screen.
FIG. 8 is a diagram showing an example of a drive mechanism of the additive manufacturing apparatus.
FIG. 9 is a diagram showing an example of a hardware configuration of a control unit.
FIG. 10 is a flowchart showing a flow of an additive manufacturing process.
FIG. 11 is a diagram for describing a variation of a method for controlling the second workpiece spindle.

### EMBODIMENTS OF THE INVENTION

Hereinafter, embodiments according to the present invention will be described with reference to the drawings. In the following description, parts and components that are the same as each other are denoted by the same reference numerals. Their names and functions are also the same. Therefore, detailed description thereof will not be repeated. Note that the embodiments and variations described below may be selectively combined as appropriate.

### <A. Appearance of additive manufacturing apparatus 100>

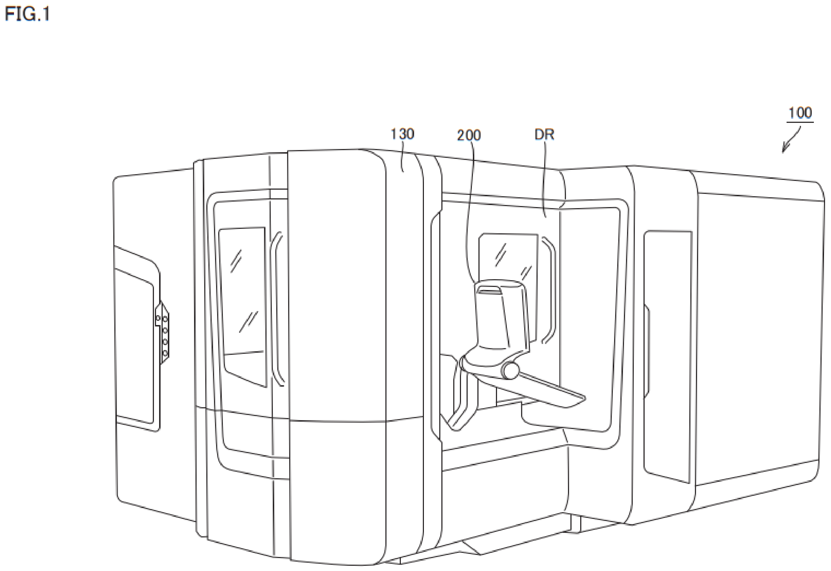

First, an additive manufacturing apparatus 100 according to an embodiment will be described with reference to FIG. 1. FIG. 1 is a diagram showing an example of the appearance of the additive manufacturing apparatus 100.

The additive manufacturing apparatus 100 is a processing machine capable of performing additive manufacturing (AM) on a workpiece. The additive manufacturing apparatus 100 performs additive manufacturing by supplying a powder material to the workpiece and irradiating the workpiece with a laser beam.

The additive manufacturing apparatus 100 may be a processing machine capable of performing not only additive manufacturing on a workpiece, but also subtractive manufacturing (SM) on the workpiece. Examples of a subtractive manufacturing function include a milling function and a turning function.

The additive manufacturing apparatus 100 includes, for example, a cover body 130 and an operation panel 200.

The cover body 130 is a mechanism for protecting parts provided inside the additive manufacturing apparatus 100. The cover body 130 is provided with a door DR. The door DR is, for example, a sliding door. The door DR may be configured to be openable and closable by a drive source such as a motor, or may be configured to be manually openable and closable.

The operation panel 200 is a general-purpose computer and has a display for displaying various types of information regarding machining. The display may be, for example, a liquid crystal display, an organic electro luminescence (EL) display, or another type of display device. The display also includes a touch panel and receives various operations performed on the additive manufacturing apparatus 100 through touch operations.

### <B. Apparatus configuration of additive manufacturing apparatus 100>

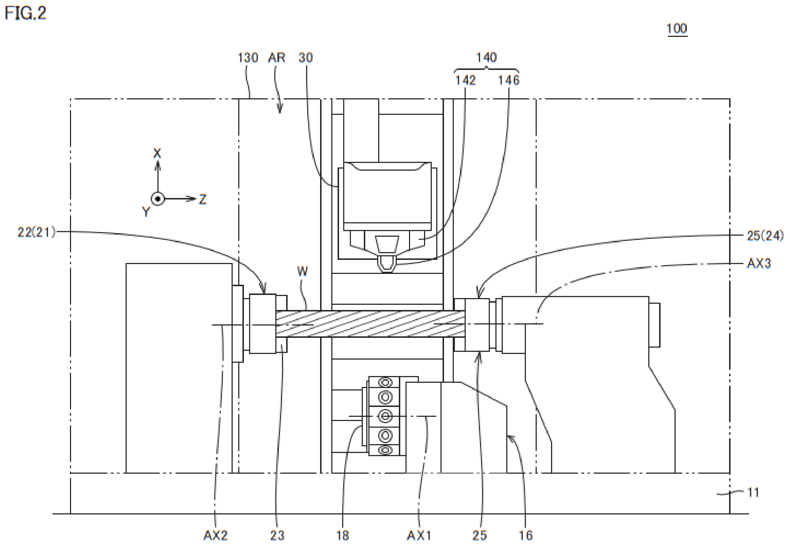

Next, an apparatus configuration of the additive manufacturing apparatus 100 will be described with reference to FIG. 2. FIG. 2 is a diagram showing an example of the apparatus configuration of the additive manufacturing apparatus 100. FIG. 2 shows, as an example of the additive manufacturing apparatus 100, an AM/SM hybrid processing machine that is capable of performing additive manufacturing on a workpiece and subtractive manufacturing on the workpiece.

As described above, the additive manufacturing apparatus 100 includes the cover body 130. The cover body 130 forms the exterior of the additive manufacturing apparatus 100, and defines a manufacturing area AR in which additive manufacturing is performed on a workpiece W.

The additive manufacturing apparatus 100 also includes a bed 11, a tool rest 16, a first support unit 21, a second support unit 24, a tool spindle 30, and a laser head 140.

For ease of explanation, hereinafter, the rotation axis direction of the first support unit 21 and the second support unit 24 will also be referred to as the "Z-axis direction". In the example of FIG. 2, the Z-axis direction is a direction parallel to rotation axes AX1 to AX3. One side in the Z-axis direction will also be referred to as the "Z-axis positive side", and the other side in the Z-axis direction will also be referred to as the "Z-axis negative side". In the example of FIG. 2, the right side of the manufacturing area AR as seen from the door DR is the "Z-axis positive side". In the example of FIG. 2, the left side of the manufacturing area AR as seen from the door DR is the "Z-axis negative side".

One direction in a horizontal plane orthogonal to the Z-axis direction will also be referred to as the "Y-axis direction". One side in the Y-axis direction will also be referred to as the "Y-axis positive side", and the other side in the Y-axis direction will also be referred to as the " Y-axis negative side".

A direction orthogonal to both the Y-axis direction and the Z-axis direction will also be referred to as the "X-axis direction". One side in the X-axis direction will also be referred to as the "X-axis positive side", and the other side in the X-axis direction will also be referred to as the "X-axis negative side". In the example of FIG. 2, the X-axis negative side corresponds to the direction of gravity.

The bed 11 is a base member for supporting various devices in the additive manufacturing apparatus 100. In the example of FIG. 2, the bed 11 supports the tool rest 16, the first support unit 21, the second support unit 24, the tool spindle 30, and the laser head 140. The bed 11 is placed on the floor of a factory or the like. The bed 11 is made of a metal such as cast iron.

The tool rest 16 has a turret 18. The turret 18 is configured to be rotatable around the rotation axis AX1. The turret 18 holds a plurality of tools spaced apart in the circumferential direction around the rotation axis AX1. The tool rest 16 is also configured to be movable in the X-axis direction and the Y-axis direction by various drive mechanisms such as motors. The tool rest 16 brings a fixed tool held by the turret 18 into contact with the workpiece W that is rotationally driven by the first support unit 21, thereby performing lathe-turning processing.

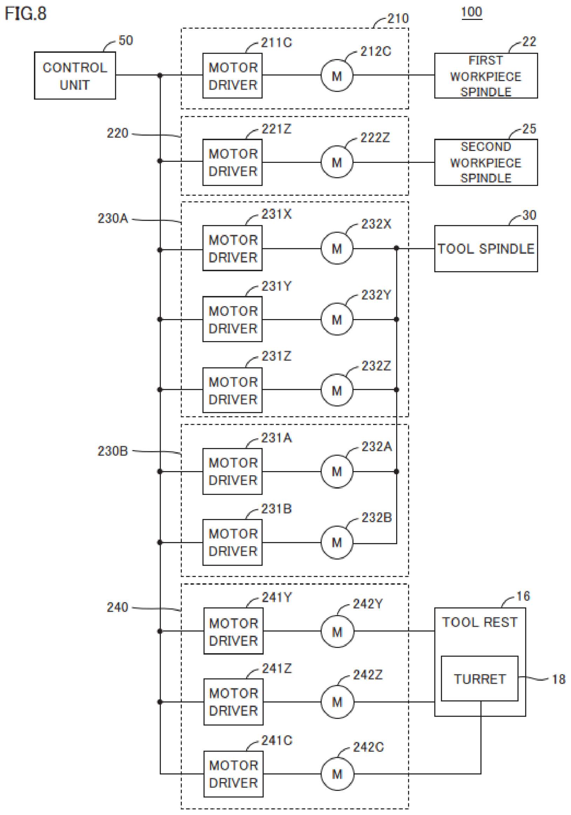

The first support unit 21 is configured to support one side of the workpiece W in the direction of the rotation axis AX2. The rotation axis AX2 runs in a direction along the axial direction of the first support unit 21. The first support unit 21 is also configured to be rotatable around the rotation axis AX2 along the axial direction. The first support unit 21 is rotationally driven by the motor 212C (see FIG. 8) described below, for example.

Any mechanism can be adopted as the support mechanism by which the workpiece W is supported by the first support unit 21. FIG. 2 shows a first workpiece spindle 22 as an example of the first support unit 21. The first workpiece spindle 22 is provided with a chuck mechanism 23 for gripping one side of the workpiece W. The chuck mechanism 23 is a mechanism for fixing the workpiece W to the first workpiece spindle 22.

The second support unit 24 is arranged to face the first support unit 21 in the axial direction of the rotation axis AX2 or the rotation axis AX3. The rotation axis AX3 runs along the axial direction of the first support unit 21 and is coaxial with the rotation axis AX2. In other words, the second support unit 24 is configured to support the other side of the workpiece W in the direction of the rotation axis AX3.

The rotation axis AX3 runs along the axial direction of the second support unit 24. The second support unit 24 is configured to be rotatable around the rotation axis AX3 along the axial direction. The second support unit 24 is configured to rotate in response to rotation of the first support unit 21, for example.

Any mechanism can be adopted as the support mechanism by which the workpiece W is supported by the second support unit 24. FIG. 2 shows a second workpiece spindle 25 as an example of the second support unit 24. The second workpiece spindle 25 is provided with a chuck mechanism 26 for gripping the other side of the workpiece W. The chuck mechanism 26 is a mechanism for fixing the workpiece W to the second workpiece spindle 25.

As another example, the second support unit 24 may be a tailstock (not shown). The tailstock is provided with a tailstock mechanism for supporting the other side of the workpiece W. In this case, the tailstock is provided with a center pin (not shown) instead of the chuck mechanism 26. The center pin has a pin shape that extends in the direction of the rotation axis AX3. Accordingly, the center pin supports the end face of the workpiece W from the side opposite the first support unit 21.

The following description will be given on the assumption that the first support unit 21 is the first workpiece spindle 22, but the first support unit 21 is not limited to the first workpiece spindle 22. In addition, the following description will be given on the assumption that the second support unit 24 is the second workpiece spindle 25, but the second support unit 24 is not limited to the second workpiece spindle 25.

The tool spindle 30 is provided, for example, at a higher position than the first workpiece spindle 22 and the second workpiece spindle 25. Also, the tool spindle 30 is configured to allow a tool or the laser head 140 to be detachably attached. FIG. 2 shows an example in which the laser head 140 is attached to the tool spindle 30.

The laser head 140 can be attached to and detached from the tool spindle 30 by an automatic tool changer (ATC), for example. The additive manufacturing apparatus 100 attaches the laser head 140 to the tool spindle 30 when performing additive manufacturing on the workpiece W. On the other hand, the additive manufacturing apparatus 100 attaches a tool to the tool spindle 30 when performing subtractive manufacturing on the workpiece W.

An example of subtractive manufacturing is milling, in which a rotating tool is brought into contact with the workpiece W fixed to the first workpiece spindle 22. Another example of subtractive manufacturing is turning, in which a tool is pressed against a workpiece W rotating around the rotation axis AX2.

The laser head 140 performs additive manufacturing through direct energy deposition (DED) while attached to the tool spindle 30. The laser head 140 has a head body 142 and a laser nozzle 146, as a mechanism for realizing additive manufacturing.

A powder material is supplied to the head body 142 via a cable (not shown). The supplied powder material may be metal powder, resin powder, or any other type of powder that melts when irradiated with a laser beam.

The laser nozzle 146 emits a laser beam toward the workpiece W and determines an irradiation region of the workpiece W to be irradiated with the laser beam. The powder material supplied to the laser head 140 is discharged toward the workpiece W through the laser nozzle 146.

### <C. Additive manufacturing>

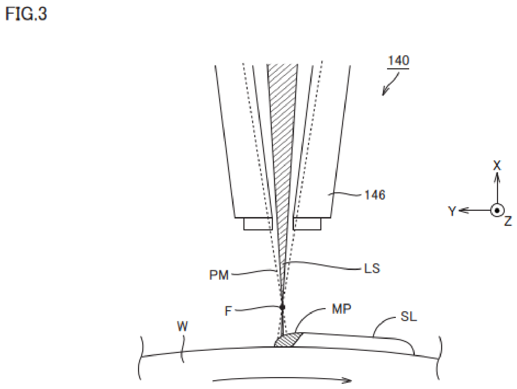

Next, additive manufacturing performed by the laser head 140 will be described in detail with reference to FIG. 3. FIG. 3 is a cross-sectional view of the laser head 140 during additive manufacturing.

The additive manufacturing apparatus 100 can realize various types of additive manufacturing by controlling the laser head 140. Types of additive manufacturing include a lamination process and a coating process. The lamination process is a process of forming layers SL on the workpiece W. The coating process is a process of covering part or all of the surface of the workpiece W with a layer SL.

The additive manufacturing apparatus 100 according to the embodiment is configured to realize high-speed additive manufacturing. An example of a high-speed additive manufacturing technique is Extreme High-Speed Laser Application (EHLA).

More specifically, while moving in the Z-axis direction, the laser head 140 irradiates the rotating workpiece W with a laser beam LS. As a result, the portion irradiated with the laser beam LS melts, and a molten pool MP is formed on the workpiece W.

The laser head 140 also supplies a powder material PM to the workpiece W in parallel with the irradiation with the laser beam LS. The supplied powder material PM is melted by the laser beam LS before reaching the surface of the workpiece W. As a result, the melted powder material PM is introduced into the molten pool MP. The molten pool MP hardens on the workpiece W and becomes a layer SL.

The additive manufacturing performed by the additive manufacturing apparatus 100 does not necessarily have to be high-speed additive manufacturing. As an example, the additive manufacturing apparatus 100 may implement additive manufacturing on the workpiece W by rotating the first workpiece spindle 22 at a low speed. In this case, the additive manufacturing apparatus 100 performs additive manufacturing with a focus F of the laser beam LS positioned on the surface of the workpiece W.

### <D. Method for controlling second workpiece spindle 25 during additive manufacturing>

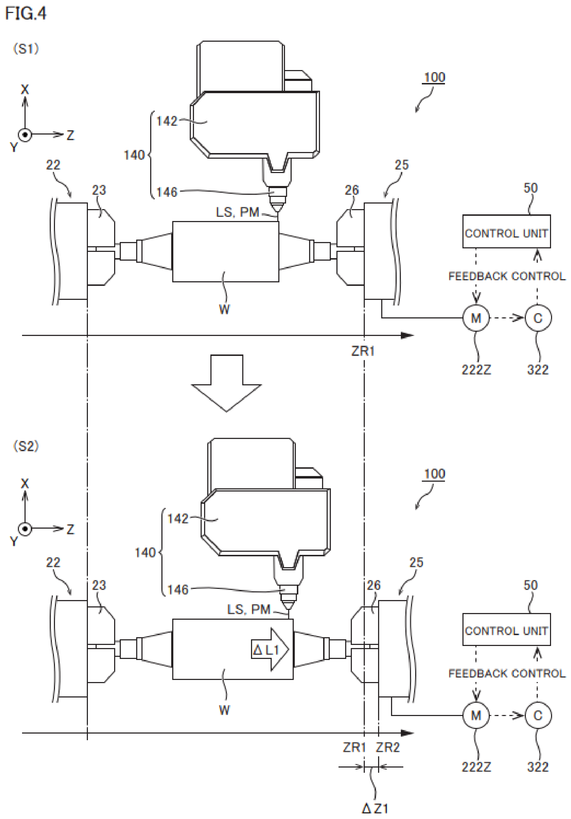

Next, a method for controlling the second workpiece spindle 25 during additive manufacturing will be described with reference to FIG. 4. FIG. 4 is a diagram schematically showing a control mode for the second workpiece spindle 25 during additive manufacturing.

As described above, the second workpiece spindle 25 is configured to be movable along its axial direction (that is, the Z-axis direction). The movement is driven by a motor 222Z (drive unit). The driving of the motor 222Z is controlled by the control unit 50 of the additive manufacturing apparatus 100.

The additive manufacturing apparatus 100 also includes a sensor 322 (first detection unit). The sensor 322 is a sensor for detecting a physical quantity correlated with the torque applied to the motor 222Z. An example of the physical quantity is the current output to the motor 222Z. In this case, the sensor 322 is a current sensor that detects the magnitude of the current output to the motor 222Z (load current value). The current value detected by the sensor 322 is output to the control unit 50.

Another example of the physical quantity is a load on the drive shaft of the motor 222Z.

In this case, the sensor 322 is a torque sensor that is provided on the drive shaft of the motor 222Z, and directly detects the load (torque) on the drive shaft.

For ease of explanation, hereinafter, the physical quantity correlated with the torque applied to the motor 222Z will also be simply referred to as "torque".

In step S1, the control unit 50 causes the first workpiece spindle 22 and the second workpiece spindle 25 to hold the workpiece W. Next, the control unit 50 controls the first workpiece spindle 22 to rotate the workpiece W. Accordingly, the workpiece W rotates around the Z-axis direction. Thereafter, the control unit 50 controls the laser head 140 to perform additive manufacturing on the workpiece W held by the first workpiece spindle 22 and the second workpiece spindle 25. Accordingly, the laser head 140 supplies the powder material PM to the rotating workpiece W while irradiating with the laser beam LS.

When the workpiece W is irradiated with the laser beam LS during additive manufacturing on the workpiece W, the workpiece W thermally expands. At this time, if both the first workpiece spindle 22 and the second workpiece spindle 25 are fixed to the additive manufacturing apparatus 100, the surface of the workpiece W will become distorted so as to protrude radially outward from the rotation axis. However, in the additive manufacturing apparatus 100 according to the embodiment, the second workpiece spindle 25 is configured to be movable along its axial direction (that is, the Z-axis direction). Therefore, the second workpiece spindle 25 moves in accordance with the expansion of the workpiece W to the positive side in the Z-axis direction. In step S2, the workpiece W expands by a length ΔL1 to the positive side in the Z-axis direction due to thermal expansion as compared to step S1.

The control unit 50 according to the embodiment controls the motor 222Z during additive manufacturing on the workpiece such that the torque detected by the sensor 322 approaches a predetermined target value. In other words, the control unit 50 controls the motor 222Z such that the torque detected by the sensor 322 stays constant. The target value is set to a predetermined percentage (for example, 90 percent) of the maximum allowable torque, for example.

Hereinafter, the control mode for keeping the torque of the motor 222Z constant will also be referred to as "torque feedback control". The torque feedback control may be implemented by Proportional-Integral (PI) control , Proportional-Differential (PD) control, or Proportional-Integral-Differential (PID) control.

More specifically, if the torque detected by the sensor 322 is greater than a predetermined target value, the control unit 50 controls the motor 222Z to drive the second workpiece spindle 25 to the positive side of the Z-axis direction. In the example of FIG. 4, the control unit 50 moves the second workpiece spindle 25, which was at a position "ZR1" in step S1, to the positive side in the Z-axis direction by a length of "ΔZ1" in step S2. As a result, the second workpiece spindle 25 is driven to a position "ZR2".

This prevents the surface of the workpiece W from becoming distorted due to the thermal expansion of the workpiece W. As a result, the additive manufacturing apparatus 100 can deposit the powder material PM at an intended position on the surface of the workpiece W, thereby enabling high-precision additive manufacturing to be performed on the workpiece W. The additive manufacturing apparatus 100 can also address the thermal expansion of the workpiece W without simulating the amount of thermal expansion of the workpiece.

In the above description, an example has been taken in which the second workpiece spindle 25 is driven in the Z-axis direction in response to thermal expansion of the workpiece W. Instead, the first workpiece spindle 22 may be driven in the Z-axis direction in response to thermal expansion of the workpiece W. Alternatively, both the first workpiece spindle 22 and the second workpiece spindle 25 may be driven in the Z-axis direction in response to thermal expansion of the workpiece W.

### <E. Method for controlling second workpiece spindle 25 during cooling of workpiece>

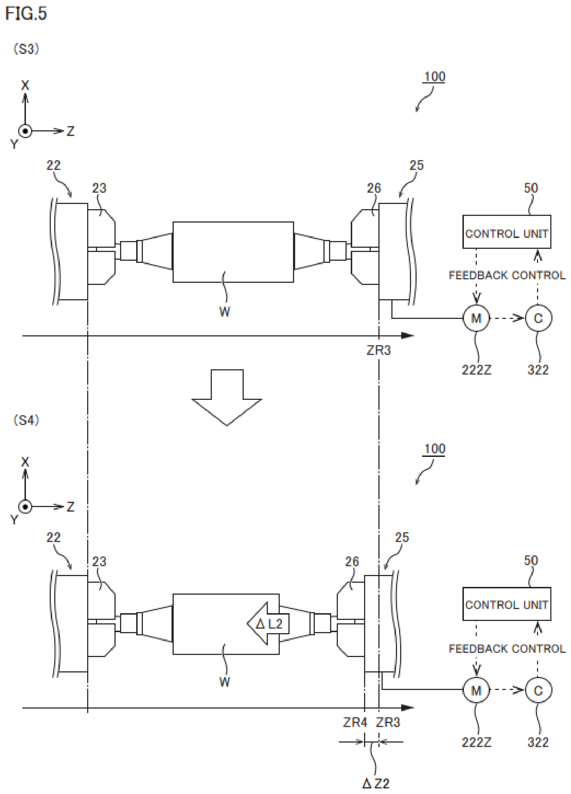

Next, a method for controlling the second workpiece spindle 25 during cooling of the workpiece will be described with reference to FIG. 5. FIG. 5 is a diagram schematically showing a control mode for the second workpiece spindle 25 during cooling of the workpiece.

In step S3, the control unit 50 determines that additive manufacturing on the workpiece W has been completed. Accordingly, the control unit 50 controls the laser head 140 to stop the supply of the powder material PM and the irradiation with the laser beam LS. Thereafter, the temperature of the workpiece W decreases, and the workpiece W thermally contracts. Since the first workpiece spindle 22 is fixed, the workpiece W contracts to the negative side in the Z-axis direction. In step S4, the workpiece W contracts to the negative side in the Z-axis direction by a length ΔL2 due to the thermal contraction, in comparison with step S3. At this time, if the position of the second workpiece spindle 25 is fixed, residual stress may be generated in the workpiece W.

Therefore, the control unit 50 continues the torque feedback control even after the additive manufacturing on the workpiece. More specifically, if the torque detected by the sensor 322 is smaller than a predetermined target value, the control unit 50 controls the motor 222Z to drive the second workpiece spindle 25 to the negative side in the Z-axis direction. In the example of FIG. 5, the control unit 50 moves the second workpiece spindle 25, which was at a position "ZR3" in step S3, to the negative side in the Z-axis direction by a length of "ΔZ2" in step S4. As a result, the second workpiece spindle 25 is driven to a position "ZR4".

This suppresses the case where residual stress remains in the workpiece W after additive manufacturing on the workpiece W. As a result, the quality of the workpiece W after additive manufacturing is improved.

In the above description, an example has been taken in which the second workpiece spindle 25 is driven in the Z-axis direction in response to thermal contraction of the workpiece W. Instead, the first workpiece spindle 22 may be driven in the Z-axis direction in response to thermal contraction of the workpiece W. Alternatively, both the first workpiece spindle 22 and the second workpiece spindle 25 may be driven in the Z-axis direction in response to thermal contraction of the workpiece W.

### <F. Position monitoring function>

As described above, the control unit 50 executes the above-described torque feedback control during additive manufacturing on the workpiece W. Accordingly, the position of the second workpiece spindle 25 moves in accordance with thermal expansion and thermal contraction of the workpiece W. At this time, the control unit 50 preferably monitors the position of the second workpiece spindle 25 such that the position of the second workpiece spindle 25 does not deviate from the normal range.

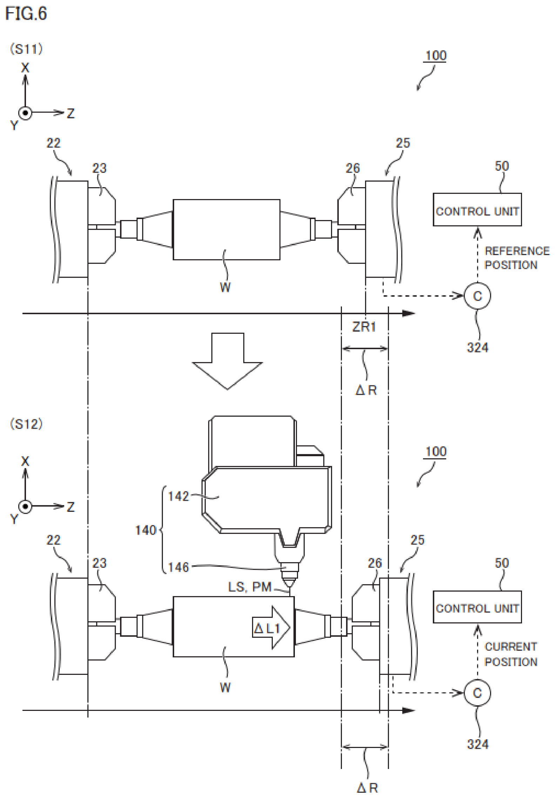

Hereinafter, a position monitoring function for the second workpiece spindle 25 will be described with reference to FIG. 6. FIG. 6 is a diagram schematically showing the position monitoring function for the second workpiece spindle 25.

The additive manufacturing apparatus 100 includes a position sensor 324 for detecting the position of the second workpiece spindle 25 in the movement direction (that is, the Z-axis direction). The position sensor 324 can be any type of sensor. As an example, the position sensor 324 is a linear encoder. The position detected by the position sensor 324 is output to the control unit 50.

Before the start of additive manufacturing in step S11, the control unit 50 causes the first workpiece spindle 22 and the second workpiece spindle 25 to hold the workpiece W. At this time, the control unit 50 acquires the position "ZR1" of the second workpiece spindle 25 from the position sensor 324, and sets a normal range ΔR using the position "ZR1" as a reference position. The lower limit of the normal range ΔR takes a value obtained by subtracting a predetermined value (for example, 5 mm) from the reference position "ZR1", for example. The upper limit of the normal range ΔR takes a value obtained by adding a predetermined value (for example, 5 mm) to the reference position "ZR1", for example.

In step S12, the control unit 50 starts additive manufacturing based on the torque feedback control described above. During execution of the torque feedback control, the control unit 50 periodically acquires the current position of the second workpiece spindle 25 and monitors whether the acquired current position falls within the preset normal range ΔR. If the current position of the second workpiece spindle 25 deviates from the normal range ΔR, the control unit 50 executes a predetermined abnormality handling process.

As an example of the abnormality handling process, the control unit 50 executes a process of stopping the additive manufacturing. In this case, the control unit 50 controls the laser head 140 to stop the supply of the powder material PM and the irradiation with the laser beam LS.

As another example of the abnormality handling process, the control unit 50 stops the drive process of the motor 222Z based on the torque feedback control described above, and executes a process of controlling the motor 222Z to maintain the position of the second workpiece spindle 25 at the current position. That is, the control unit 50 switches from the torque feedback control to keep the torque applied to the second workpiece spindle 25 constant, to position feedback control to keep the position of the second workpiece spindle 25 constant. This prevents the position of the second workpiece spindle 25 from deviating significantly from the normal range ΔR.

More specifically, if the position detected by the position sensor 324 exceeds a predetermined target position, the control unit 50 controls the motor 222Z to drive the second workpiece spindle 25 to the negative side in the Z axis direction. On the other hand, if the position detected by the position sensor 324 falls below the predetermined target position, the control unit 50 controls the motor 222Z to drive the second workpiece spindle 25 to the positive side in the Z axis direction.

The predetermined target position is switched as appropriate depending on whether the position of the second workpiece spindle 25 exceeds the upper limit of the normal range ΔR or falls below the lower limit of the normal range ΔR. More specifically, if the position of the second workpiece spindle 25 exceeds the upper limit of the normal range ΔR, the control unit 50 sets the predetermined target position to the upper limit of the normal range ΔR. On the other hand, if the position falls below the lower limit of the normal range ΔR, the control unit 50 sets the predetermined target position to the lower limit of the normal range ΔR.

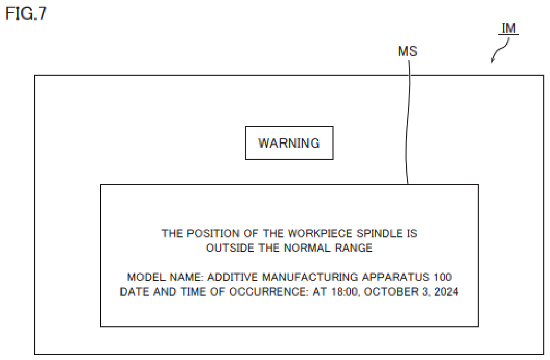

As yet another example of the abnormality handling process, the control unit 50 executes a process of outputting a warning indicating that the position of the second workpiece spindle 25 is outside the normal range ΔR. FIG. 7 is a diagram showing an example of a warning screen IM.

The warning screen IM includes a warning message MS indicating that the position of the second workpiece spindle 25 is outside the normal range ΔR, for example. The output destination of the warning screen IM may be the display of the additive manufacturing apparatus 100, or may be the display of a terminal (for example, a management apparatus or a server) different from the additive manufacturing apparatus 100. This allows the operator to recognize that the position of the second workpiece spindle 25 is outside the normal range ΔR.

### <G. Drive mechanism of additive manufacturing apparatus 100>

Next, the drive mechanism of the additive manufacturing apparatus 100 will be described with reference to FIG. 8. FIG. 8 is a diagram showing an example of the drive mechanism of the additive manufacturing apparatus 100.

As shown in FIG. 8, the additive manufacturing apparatus 100 includes a control unit 50 and drive units 210, 220, 230A, 230B, and 240.

The control unit 50 controls various devices in the additive manufacturing apparatus 100. The control unit 50 may have any device configuration. The control unit 50 may be constituted by a single control unit, or may be constituted by a plurality of control units. In one example, the control unit 50 includes at least one of a Computer Numerical Control (CNC) and a Programmable Logic Controller (PLC). The control unit 50 may include at least one of a Programmable Logic Controller (PLC) and a Programmable Logic Controller (PLC). The control unit 50 may also include at least one of motor drivers 211C, 221Z, 231X to 231Z, 231A, 231B, 241Y, 241Z, and 241C shown in FIG. 8.

The drive unit 210 is a drive mechanism for driving the first workpiece spindle 22 to rotate. The drive unit 210 may be constituted by a single drive unit, or may be constituted by a plurality of drive units. In the example shown in FIG. 8, the drive unit 210 is constituted by the motor driver 211C and the motor 212C.

The motor driver 211C successively receives input of target rotation angles or target rotation speeds of the first workpiece spindle 22 from the control unit 50, and outputs a current according to the target rotation angles or the target rotation speeds to the motor 212C. As a result, the workpiece held by the first workpiece spindle 22 rotates around the Z-axis direction as the rotation center. The motor 212C may be an AC motor, may be a stepping motor, may be a servo motor, or may be another type of motor.

The drive unit 220 is a drive mechanism for driving the second workpiece spindle 25.

The drive unit 220 may be constituted by a single drive unit, or may be constituted by a plurality of drive units. In the example shown in FIG. 8, the drive unit 220 is constituted by the motor driver 221Z and a motor 222Z.

The motor driver 221Z successively receives input of target positions of the second workpiece spindle 25 from the control unit 50, and outputs a current according to the target positions to the motor 222Z. As a result, the motor 222Z moves the second workpiece spindle 25 to any position in the Z-axis direction. The motor 222Z may be an AC motor, may be a stepping motor, may be a servo motor, or may be another type of motor.

The drive unit 230A is a drive mechanism for moving the position of the tool spindle 30. The above-described laser head 140 is driven by being attached to the tool spindle 30. The drive unit 230A may be constituted by a single drive unit, or may be constituted by a plurality of drive units. In the example shown in FIG. 8, the drive unit 230A is constituted by motor drivers 231X to 231Z and motors 232X to 232Z.

The motor driver 231X successively receives input of target positions of the tool spindle 30 in the X-axis direction from the control unit 50, and outputs a current according to the target positions to the motor 232X. As a result, the motor 232X drives the tool spindle 30 to any position in the X-axis direction. The motor 232X may be an AC motor, may be a stepping motor, may be a servo motor, or may be another type of motor.

The motor driver 231Y successively receives input of target positions of the tool spindle 30 in the Y-axis direction from the control unit 50, and outputs a current according to the target positions to the motor 232Y. As a result, the motor 232Y drives the tool spindle 30 to any position in the Y-axis direction. The motor 232Y may be an AC motor, may be a stepping motor, may be a servo motor, or may be another type of motor.

The motor driver 231Z successively receives input of target positions of the tool spindle 30 in the Z-axis direction from the control unit 50, and outputs a current according to the target positions to the motor 232Z. As a result, the motor 232Z moves the tool spindle 30 to any position in the Z-axis direction. The motor 232Z may be an AC motor, may be a stepping motor, may be a servo motor, or may be another type of motor.

The drive unit 230B is a drive mechanism for driving the tool spindle 30 to rotate. The drive unit 230B may be constituted by a single drive unit, or may be constituted by a plurality of drive units. In the example shown in FIG. 8, the drive unit 230B is constituted by motor drivers 231A and 231B and motors 232A and 232B.

The motor driver 231A successively receives input of target rotation angles or target rotation speeds of the tool spindle 30 around the Y-axis direction from the control unit 50, and outputs a current according to the target rotation angles or the target rotation speeds to the motor 232A. The motor 232A drives the tool spindle 30 to rotate around the Y-axis direction. The motor 232A may be an AC motor, may be a stepping motor, may be a servo motor, or may be another type of motor.

The motor driver 231B successively receives input of target rotation angles or target rotation speeds of the tool spindle 30 around the axial direction of the tool spindle 30 from the control unit 50, and outputs a current according to the target rotation angles or the target rotation speeds to the motor 232B. The motor 232B drives the tool spindle 30 to rotate around the axial direction of the tool spindle 30 as the rotation center. The motor 232B may be an AC motor, may be a stepping motor, may be a servo motor, or may be another type of motor.

The drive unit 240 is a drive mechanism for driving the tool rest 16 and the turret 18. The drive unit 240 may be constituted by a single drive unit, or may be constituted by a plurality of drive units. In the example shown in FIG. 8, the drive unit 240 is constituted by motor drivers 241C, 241Y, and 241Z and motors 242C, 242Y, and 242Z.

The motor driver 241C receives input of a target value of the rotation angle of the turret 18 around the Z-axis direction, and outputs a current corresponding to the target value to the motor 242C. As a result, the motor driver 241C controls the rotation angle of the turret 18 around the Z-axis direction. The motor 242C may be may be an AC motor, may be a stepping motor, may be a servo motor, or may be another type of motor.

The motor driver 241Y successively receives input of target positions of the tool rest 16 in the X-axis direction from the control unit 50, and outputs a current according to the target positions to the motor 242Y. As a result, the motor 242Y drives the tool rest 16 to any position in the X-axis direction. The motor 242Y may be an AC motor, may be a stepping motor, may be a servo motor, or may be another type of motor.

The motor driver 241Z successively receives input of target positions of the tool rest 16 in the Z-axis direction from the control unit 50, and outputs a current corresponding to the target position to the motor 242Z. As a result, the motor 242Z moves the tool rest 16 to any position in the Z-axis direction. The motor 242Z may be an AC motor, may be a stepping motor, may be a servo motor, or may be another type of motor.

### <H. Hardware configuration of control unit 50>

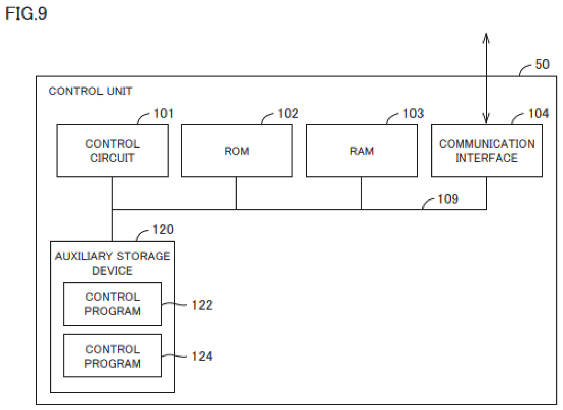

Next, the hardware configuration of the control unit 50 shown in FIG. 8 will be described with reference to FIG. 9. FIG. 9 is a diagram showing an example of the hardware configuration of the control unit 50.

As described above, the control unit 50 may be a CNC or a PLC. FIG. 9 shows the hardware configuration in the case where the control unit 50 is a CNC.

The control unit 50 includes, for example, a control circuit 101, a read only memory (ROM) 102, a random access memory (RAM) 103, a communication interface 104, and an auxiliary storage device 120. These components are connected to an internal bus 109.

The control circuit 101 is constituted by, for example, at least one integrated circuit. The integrated circuit may be constituted by, for example, at least one central processing unit (CPU), at least one graphics processing unit (GPU), at least one application specific integrated circuit (ASIC), at least one field programmable gate array (FPGA), or a combination of them.

The control circuit 101 controls the operation of the control unit 50 by executing various programs, such as a control program 122. The control program 122 is a program for realizing various processes mentioned in this specification. Upon receiving an execution command for the control program 122, the control circuit 101 reads the control program 122 from the ROM 102 to the RAM 103. The RAM 103 functions as a working memory and temporarily stores various types of data necessary for executing the control program 122.

The communication interface 104 is an interface for realizing communication with various devices. The additive manufacturing apparatus 100 communicates, for example, via the communication interface 104, with various drive units (e.g., the above-described drive units 210, 220, 230A, 230B, 240, and the like) for realizing additive manufacturing on a workpiece.

The auxiliary storage device 120 is a storage medium such as a hard disk or a flash memory, for example. The auxiliary storage device 120 stores the control program 122 and the like. The control program 122 is not limited to being stored in the auxiliary storage device 120, and can also be stored in a storage area (e.g., a cache memory) of the control circuit 101, the ROM 102, the RAM 103, an external device (e.g., a server), or the like.

Furthermore, rather than being a standalone program, the control program 122 may be provided as part of a program. In this case, various types of processing pertaining to the present embodiment are realized in cooperation with the program. Even in the case of such a program that does not include some of the modules, it does not depart from the spirit of the control program 122 pertaining to the present embodiment. Also, some or all of the functions provided by the control program 122 may be realized by dedicated hardware. Furthermore, the control unit 50 may be formed as a so-called cloud service in which at least one server performs a part of the processing of the control program 122.

### <I. Control flow of additive manufacturing>

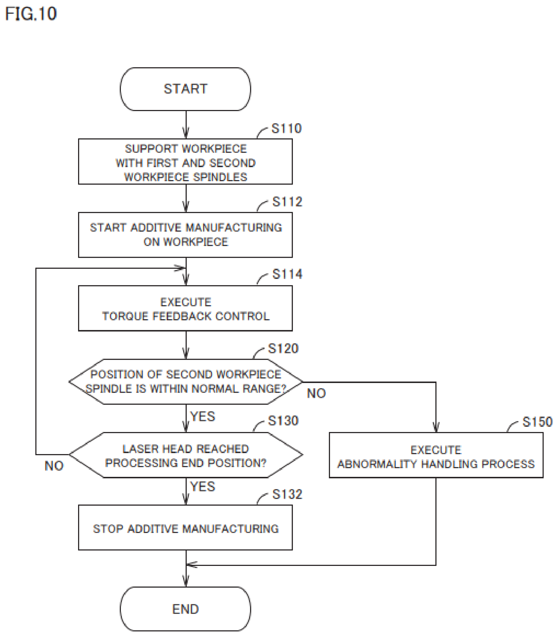

Next, a flow of controlling additive manufacturing will be described with reference to FIG. 10. FIG. 10 is a flowchart showing a flow of an additive manufacturing process.

The processing shown in FIG. 10 is realized by, for example, the control unit 50 of the additive manufacturing apparatus 100 executing the control program 122 described above. In other aspects, part or all of the processing may be executed by circuit elements or other hardware.

In step S110, the control unit 50 causes the first workpiece spindle 22 and the second workpiece spindle 25 to support the workpiece W. Accordingly, the workpiece W is arranged between the first workpiece spindle 22 and the second workpiece spindle 25.

In step S112, the control unit 50 starts additive manufacturing on the workpiece W. More specifically, the control unit 50 controls the above-described drive unit 210 (see FIG. 8 ) to start rotating the workpiece W around the Z-axis direction. Thereafter, the control unit 50 supplies the powder material PM to the workpiece W and controls the operation of the laser head 140 to irradiate the workpiece W with the laser beam LS.

In step S114, the control unit 50 controls the driving of the second workpiece spindle 25 based on the torque feedback control described above. That is, the control unit 50 controls the motor 222Z described above such that the torque applied to the second workpiece spindle 25 is constant. Accordingly, the second workpiece spindle 25 moves along the Z-axis direction in accordance with thermal expansion and thermal contraction of the workpiece W.

In step S120, the control unit 50 determines whether the position of the second workpiece spindle falls within the normal range ΔR (see FIG. 6). If it is determined that the position of the second workpiece spindle falls within the normal range ΔR (YES in step S120), the control unit 50 switches control to step S130. If not (NO in step S120), the control unit 50 switches control to step S150.

In step S130, the control unit 50 determines whether the laser head 140 has reached the processing end position. The processing end position of the laser head 140 is described in the processing program, for example. If the control unit 50 determines that the laser head 140 has reached the processing end position (YES in step S130), the control unit 50 switches control to step S132. If not (NO in step S130), the control unit 50 returns control to step S114.

In step S132, the additive manufacturing by the laser head 140 is stopped. More specifically, the control unit 50 causes the laser head 140 to stop supplying a powder material and emitting a laser beam. The control unit 50 also controls the drive unit 210 to stop rotation of the first workpiece spindle 22. Furthermore, the control unit 50 continues the torque feedback control for a predetermined time after the completion of the additive manufacturing.

In step S150, the control unit 50 executes the abnormality handling process described above. As an example, the control unit 50 stops the additive manufacturing by the laser head 140. As another example, the control unit 50 switches the control of the second workpiece spindle 25 in the position feedback control to the position feedback control. As yet another example, the control unit 50 outputs the warning screen IM (see FIG. 7) described above.

Although the flow of controlling the second workpiece spindle 25 during additive manufacturing has been described above, the control unit 50 may use different control methods for the second workpiece spindle 25 between additive manufacturing and subtractive manufacturing. As an example, the control unit 50 controls the second workpiece spindle 25 by the torque feedback control described above during additive manufacturing, and controls the second workpiece spindle 25 by the position feedback control described above during subtractive manufacturing.

### <J. Other matter>

The torque feedback control described above can be implemented by any method. As an example, the "travel to fixed stop function" that is standardly installed in NC apparatuses is used. The "travel to fixed stop function" is implemented by an FXS command, an FXSW command, and an FXST command.

The FXS command is usually a command for causing the second workpiece spindle 25 to hold the workpiece W. The FXST command is a command for setting a target torque value. The FXSW command is a command for setting the normal range ΔR of the second workpiece spindle 25.

The FXS command, the FXSW command, and the FXST command are normally commands used to cause the first workpiece spindle 22 and the second workpiece spindle 25 to hold the workpiece W, and are not used during additive manufacturing. By combining these commands, torque feedback control during additive manufacturing is implemented.

### <K. Variations>

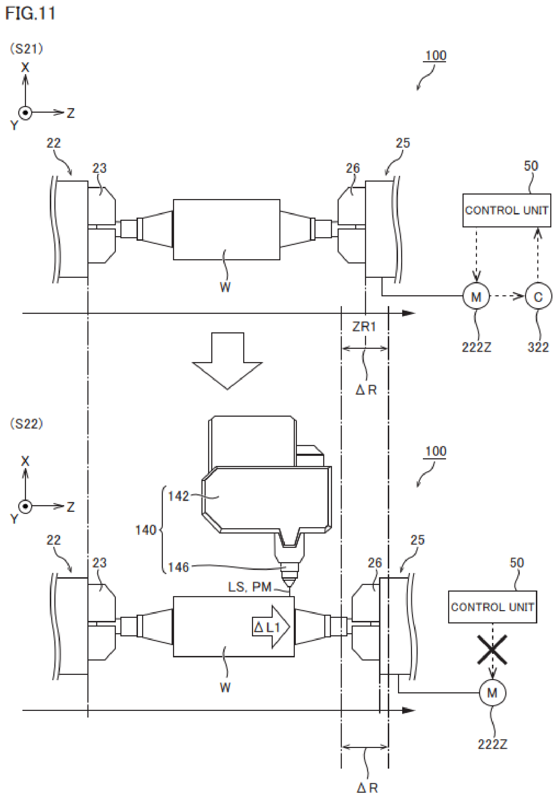

Next, a variation of the control method for the second workpiece spindle 25 during additive manufacturing will be described with reference to FIG. 11. FIG. 11 is a diagram for explaining a variation of the control method for the second workpiece spindle 25.

In the above-described embodiment, the control unit 50 controls the driving of the second workpiece spindle 25 based on the torque feedback control, thereby moving the second workpiece spindle 25 in accordance with thermal expansion and thermal contraction of the workpiece W.

In contrast, in the present variation, after causing the first workpiece spindle 22 and the second workpiece spindle 25 to grip the workpiece W, the control unit 50 substantially disables feedback control of the motor 222Z for controlling the position of at least the second workpiece spindle 25. The process of substantially disabling feedback control of the motor 222Z can be implemented in various ways. One example is to set the value of current feedback gain in the current feedback loop of the control system of an additive manufacturing apparatus 100 to zero, thereby substantially eliminating feedback. In this case, the position control of the second workpiece spindle 25 is also disabled. As another example, in the case of not switching the current feedback gain, the current feedback loop may be opened, and open-loop control may be performed. As yet another example, a function provided on the CNC side may be used to substantially eliminate the generation of resistance to changes in the position of the second workpiece spindle 25. The control unit 50 then performs additive manufacturing on the workpiece W. That is, by stopping control of the motor 222Z, the second workpiece spindle 25 maintains its position in the Z-axis direction under its own weight. As a result, the second workpiece spindle 25 can be moved manually, so that the second workpiece spindle 25 can move in accordance with thermal expansion and thermal contraction of the workpiece W.

More specifically, in step S21 before the start of additive manufacturing, the motor 222Z is driven to move the second workpiece spindle 25 closer to the first workpiece spindle 22. Accordingly, one side of the workpiece W is gripped by the first workpiece spindle 22, and the other side of the workpiece W is gripped by the second workpiece spindle 25.

Thereafter, in step S22, the control unit 50 stops control of the motor 222Z and starts additive manufacturing on the workpiece W. More specifically, the control unit 50 controls the above-described drive unit 210 (see FIG. 8 ) to start rotating the workpiece W. Thereafter, the control unit 50 supplies the powder material PM to the workpiece W and controls the operation of the laser head 140 to irradiate the workpiece W with the laser beam LS.

Preferably, in the present variation as well, the control unit 50 successively acquires the current position of the second workpiece spindle 25 during additive manufacturing on the workpiece W and monitors whether the current position falls within the normal range ΔR. The method for setting the normal range ΔR is as described above, and thus description thereof will not be repeated. If the current position of the second workpiece spindle 25 deviates from the normal range ΔR, the control unit 50 executes the abnormality handling process described above.

The embodiments disclosed herein are intended to be considered to be illustrative in all respects and not restrictive. The scope of the present invention is indicated by the claims rather than the above description, and it is intended that equivalent meanings and all changes within the scope of the claims are included.

### LIST OF REFERENCE NUMERALS

11 Bed, 16 Tool rest, 18 Turret, 21 First support unit, 22 First workpiece spindle, 23 Chuck mechanism, 24 Second support unit, 25 Second workpiece spindle, 26 Chuck mechanism, 30 Tool spindle, 50 Control unit, 100 Additive manufacturing apparatus, 101 Control circuit, 102 ROM, 103 RAM, 104 Communication interface, 109 Internal bus, 120 Auxiliary storage device, 122 Control program, 130 Cover body, 140 Laser head, 142 Head body, 146 Laser nozzle, 200 Operation panel, 210 Drive unit, 211C Motor driver, 212C Motor, 220 Drive unit, 221Z Motor driver, 222Z Motor, 230A Drive unit, 230B Drive unit, 231A Motor driver, 231B Motor driver, 231X Motor driver, 231Y Motor driver, 231Z Motor driver, 232A Motor, 232B Motor, 232X Motor, 232Y Motor, 232Z Motor, 240 Drive unit, 241C Motor driver, 241Y Motor driver, 241Z Motor driver, 242C Motor, 242Y Motor, 242Z Motor, 322 Sensor, 324 Position sensor, AR Manufacturing area, AX1 Rotation axis, AX2 Rotation axis, AX3 Rotation axis, DR Door, F Focus, IM Warning screen, LS Laser beam, MP Molten pool, MS Warning message, PM Powder material, SL Layer, W Workpiece, ΔR Normal range.

## Claims

1. An additive manufacturing apparatus for performing additive manufacturing on a workpiece, the additive manufacturing apparatus comprising:
a laser head configured to perform additive manufacturing on the workpiece by supplying a powder material to the workpiece and irradiating the workpiece with a laser beam;
a first support unit configured to support one side of the workpiece in a direction along a predetermined axis and rotatably support the workpiece with respect to the predetermined axis;
a second support unit configured to support another side of the workpiece in the direction along the predetermined axis and rotatably support the workpiece with respect to the predetermined axis;
a drive unit configured to move the second support unit along the direction along the predetermined axis;
a first detection unit configured to detect a physical quantity correlated with torque applied to the drive unit; and
a control unit configured to control the additive manufacturing apparatus,
wherein the control unit executes a process of controlling the drive unit during at least one of additive manufacturing on the workpiece and cooling of the workpiece such that the physical quantity detected by the first detection unit approaches a predetermined target value.

2. The additive manufacturing apparatus according to claim 1, further comprising
a second detection unit configured to detect a position of the second support unit in the direction along the predetermined axis,
wherein the control unit further executes:
a process of monitoring whether the position falls within a predetermined range while executing the process of controlling the drive unit; and
a process of implementing a predetermined abnormality handling process if the position is outside the predetermined range.

3. The additive manufacturing apparatus according to claim 2, wherein the abnormality handling process includes switching from the process of controlling the drive unit such that the physical quantity approaches the predetermined target value to a process of controlling the drive unit such that the position detected by the second detection unit approaches a target position.

4. The additive manufacturing apparatus according to claim 2 or 3, wherein the abnormality handling process includes a process of outputting a warning indicating that the position is outside the preset range.

5. The additive manufacturing apparatus according to any one of claims 1 to 3,
wherein the first support unit is a first workpiece spindle having a chuck mechanism for gripping the one side of the workpiece, and
the second support unit is a second workpiece spindle having a chuck mechanism for gripping the other side of the workpiece.

6. The additive manufacturing apparatus according to any one of claims 1 to 3,
wherein the first support unit is a workpiece spindle having a chuck mechanism for gripping the one side of the workpiece, and
the second support unit is a tailstock having a tailstock mechanism for supporting the other side of the workpiece.

7. An additive manufacturing apparatus that performs additive manufacturing on a workpiece, the additive manufacturing apparatus comprising:
a laser head configured to perform additive manufacturing on the workpiece by supplying a powder material to the workpiece and irradiating the workpiece with a laser beam;
a first support unit configured to support one side of the workpiece in a direction along a predetermined axis and rotatably support the workpiece with respect to the predetermined axis;
a second support unit configured to support the other side of the workpiece in the direction along the predetermined axis and rotatably support the workpiece with respect to the predetermined axis;
a drive unit configured to move the second support unit along the direction along the predetermined axis; and
a control unit configured to control the additive manufacturing apparatus,
wherein the control unit executes a process for disabling control of the drive unit during at least one of additive manufacturing on the workpiece and cooling of the workpiece.

8. An additive manufacturing method in which an additive manufacturing apparatus performs additive manufacturing on a workpiece,
the additive manufacturing apparatus including:
a laser head configured to perform additive manufacturing on the workpiece by supplying a powder material to the workpiece and irradiating the workpiece with a laser beam;
a first support unit configured to support one side of the workpiece in a direction along a predetermined axis and rotatably support the workpiece with respect to the predetermined axis;
a second support unit configured to support the other side of the workpiece in the direction along the predetermined axis and rotatably support the workpiece with respect to the predetermined axis;
a drive unit configured to move the second support unit along the direction along the predetermined axis; and
a first detection unit configured to detect a physical quantity correlated with torque applied to the drive unit, and
the additive manufacturing method comprising:
a step of controlling the drive unit during at least one of additive manufacturing on the workpiece and during cooling of the workpiece such that the physical quantity detected by the first detection unit approaches a predetermined target value.

9. An additive manufacturing program for causing an additive manufacturing apparatus to perform additive manufacturing on a workpiece,
the additive manufacturing apparatus including:
a laser head configured to perform additive manufacturing on the workpiece by supplying a powder material to the workpiece and irradiating the workpiece with a laser beam;
a first support unit configured to support one side of the workpiece in a direction along a predetermined axis and rotatably support the workpiece with respect to the predetermined axis;
a second support unit configured to support the other side of the workpiece in the direction along the predetermined axis and rotatably support the workpiece with respect to the predetermined axis;
a drive unit configured to move the second support unit along the direction along the predetermined axis; and
a first detection unit configured to detect a physical quantity correlated with torque applied to the drive unit, and
the additive manufacturing program causing the additive manufacturing apparatus to execute:
a process of controlling the drive unit during at least one of additive manufacturing on the workpiece and cooling of the workpiece such that the physical quantity detected by the first detection unit approaches a predetermined target value.
